# EUROPÄISCHE PATENTSCHRIFT

(11) **EP 3 251 197 B1**
(45) Veröffentlichungstag und Bekanntmachung des Hinweises auf die Patenterteilung: **17.08.2022**
(21) Anmeldenummer: 15813266.2
(22) Anmeldetag: 14.12.2015
(51) Int. Cl.: H02K 7/02, H02K 7/116, H02K 7/112, H02K 9/06

(54) **ANTRIEB, AUFWEISEND EINEN ELEKTROMOTOR UND EIN GETRIEBE SOWIE EINE ZWISCHEN DEM ELEKTROMOTOR UND DEM GETRIEBE ANGEORDNETE KOMPONENTE, UND ANLAGE**
DRIVE HAVING AN ELECTRIC MOTOR AND A GEAR UNIT, IN ADDITION TO A COMPONENT ARRANGED BETWEEN THE ELECTRIC MOTOR AND THE GEAR UNIT, AND FACILITY
ENTRAÎNEMENT, COMPORTANT UN MOTEUR ÉLECTRIQUE ET UNE BOÎTE DE VITESSES AINSI QU'UN COMPOSANT DISPOSÉ ENTRE LE MOTEUR ÉLECTRIQUE ET LA BOÎTE DE VITESSES, ET INSTALLATION

(30) Priorität: 26.01.2015 DE 102015000775
(43) Veröffentlichungstag der Anmeldung: 06.12.2017
(73) Patentinhaber: SEW-Eurodrive GmbH & Co. Kg ABT. ECG, 76646 Bruchsal (DE)
(72) Erfinder: TROUILLET, Alexis, F-67630 Niederlauterbach (FR)
(86) Internationale Anmeldenummer: PCT/EP2015/002507
(87) Internationale Veröffentlichungsnummer: WO 2016/119806

(56) Entgegenhaltungen:
- DE-U1-202006 014 140
- DE-U1-202006 014 140
- GB-A- 2 185 551
- US-A- 3 555 317
- US-A- 4 589 855
- US-A1- 2012 175 978

## Beschreibung

Die Erfindung betrifft einen Antrieb, aufweisend einen Elektromotor und ein Getriebe sowie eine zwischen dem Elektromotor und dem Getriebe angeordnete Komponente **und eine Anlage mit einem Antrieb.**

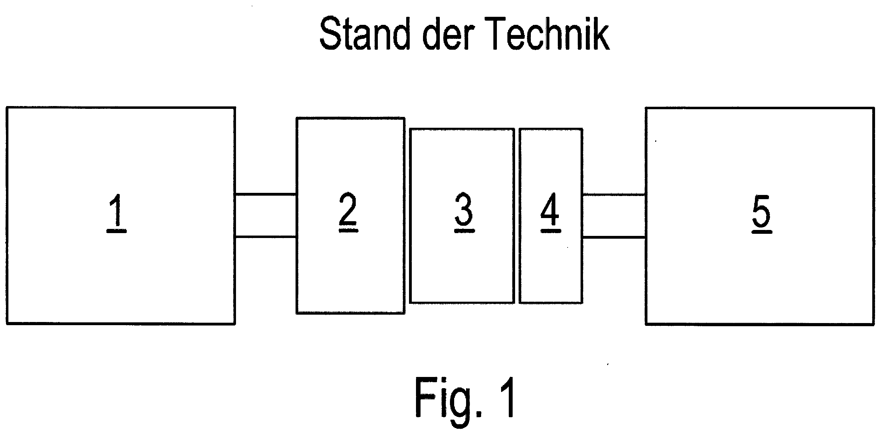

Bei industriellen Antrieben ist es bekannt, von einem Elektromotor angetriebene Getriebe im dreistelligen Kilowattbereich oder Megawattbereich einzusetzen. Wie in Figur 1 gezeigt, wird hierbei zwischen dem Getriebe 5 und dem Motor 1 eine Kupplung 2, eine Bremse 3 und ein Lüfter 4 zur Kühlung des Getriebes eingesetzt.

**Aus der** GB 2 185 551 A **ist ein Leitungsübertragungssystem bekannt.**

**Aus der** US 3 555 317 A **ist ein Elektromotor mit Kupplung bekannt.**

**Aus der** US 2012/175978 A1 **ist eine Luft-gekühlte elektrische Maschine bekannt.**

**Aus der** US 4 589 855 A **ist eine verstärkt Luftgekühlte Anordnung bekannt.**

**Aus der** DE 20 2006 014140 U1 **ist ein elektromotorisches Küchengerät mit Kühlrad zum Kühlen von Getriebeelementen bekannt.**

Der Erfindung liegt daher die Aufgabe zugrunde, einen Antrieb mit verringerter Unwucht weiterzubilden.

Erfindungsgemäß wird die Aufgabe bei dem Antrieb nach den in Anspruch 1 und bei der Anlage nach den in Anspruch 2 angegebenen Merkmalen gelöst.

Wichtige Merkmale der Erfindung bei dem Antrieb sind, dass der Antrieb einen Elektromotor und ein Getriebe sowie eine zwischen dem Elektromotor und dem Getriebe angeordnete Komponente aufweist,
wobei die Komponente ein erstes und ein zweites Teil aufweist,
wobei die Rotorwelle des Elektromotors mit dem ersten Teil drehfest verbunden ist und die eintreibende Welle des Getriebes mit dem zweiten Teil drehfest verbunden ist,
wobei an dem zweiten Teil Lüfterflügel derart ausgeformt oder angeordnet sind, dass der von den Lüfterflügeln vorzugsweise radial angesaugte Luftstrom in axialer Richtung zum Getriebe hin gefördert wird, insbesondere also am zweiten Teil ein Axiallüfter ausgebildet ist.

Von Vorteil ist dabei, dass die Unwucht verringert ist, da am zweiten Teil Lüfterflügel angeordnet sind. Denn durch den von den Lüfterflügeln geförderten Luftstrom, die dadurch bewirkten Kräfte und die Masse der Lüfterflügel ist die Unwucht verringerbar. Der Luftstrom wirkt durch die Umlenkung in axiale Richtung besonders stabilisierend auf das zweite Teil.

Bei einer vorteilhaften Ausgestaltung sind das zweite Teil und das erste Teil dasselbe Teil, insbesondere welches einteilig, insbesondere einstückig, ausgebildet ist, und dieses Teil als Bremsscheibe oder Bremstrommel ausgeführt ist. Von Vorteil ist dabei, dass keine Kupplung notwendig ist, da Rotorwelle und eintreibende Getriebewelle direkt verbindbar sind, insbesondere sogar einstückig, also einteilig ausführbar.

**Erfindungsgemäß** ist das erste Teil ein erstes Kupplungsteil und das zweite Teil ein zweites Kupplungsteil einer schaltbaren Kupplung, wobei Drehmoment vom ersten zum zweiten Kupplungsteil abhängig vom Schaltzustand durchleitbar ist oder nicht. Von Vorteil ist dabei, dass eine Kupplung einsetzbar ist, wobei das Drehmoment vom Motor zum Getriebe durchleitbar ist oder nicht - abhängig vom Schaltzustand der Kupplung. Vorzugsweise ist die Kupplung als hydraulische Flüssigkeitskupplung ausgeführt.

**Erfindungsgemäß** ist das zweite Teil, also das zweite Kupplungsteil, mit einer Bremsscheibe oder Bremstrommel integriert ausgebildet. Von Vorteil ist dabei, dass eine Integration der Funktionen ermöglicht ist und somit eine sehr kompakte Ausführung erreichbar ist, insbesondere bei Verringerung der Unwucht.

**Erfindungsgemäß** ist die Kupplung als Flüssigkeitskupplung ausgebildet, insbesondere wobei erstes und zweites Kupplungsteil auf den einander zugewandten Seiten Lamellen aufweisen. Von Vorteil ist dabei, dass eine besonders einfach herstellbare und funktionssichere Kupplung herstellbar ist.

**Erfindungsgemäß** wird bei Bestromung eines Elektromagneten eine Bremsbacke auf die Bremsscheibe oder Bremstrommel entgegen der von einem Federelement erzeugten Federkraft gedrückt. Von Vorteil ist dabei, dass eine elektrisch steuerbare Bremse herstellbar ist. Dabei fungiert das Kupplungsteil an seinem radial äußeren Randbereich als Bremsscheibe oder Bremstrommel. Auch die Betätigung der Bremse erhöht die Stabilität des zweiten Teils, so dass eine Verringerung der Unwucht mitbewirkt wird. **Erfindungsgemäß** ist der Lüfter am zweiten Teil integriert ausgeführt, wobei das zweite Teil auch als zweites Kupplungsteil fungiert und als Bremsscheibe beziehungsweise Bremstrommel. Von Vorteil ist dabei, dass die Masse des zweiten Teils erhöht ist und der umgelenkte Luftstrom ebenfalls zur Verringerung der Unwucht beiträgt. Außerdem ist eine kompakte Ausführung erreichbar.

**Erfindungsgemäß** ist das erste und zweite Teil von einem gemeinsamen Gehäuse umgeben,also wird im Gehäuse die Lüfterfunktion, Bremsfunktion und Kupplungsfunktion ausgeführt. Von Vorteil ist dabei, dass nur ein einziges Gehäuse für die verschiedenen Funktionen notwendig ist.

Wichtige Merkmale bei der Anlage mit einem vorgenannten Antrieb, sind, dass die Anlage ein Bergwerk ist und der Antrieb in einem Stollen des Bergwerks angeordnet ist, wobei der Antrieb eine Fördervorrichtung antreibt, insbesondere wobei eine Querschnittsfläche des Antriebs größer als ein Zehntel und kleiner als die Hälfte der Querschnittsfläche des Stollens beträgt.

Von Vorteil ist dabei, dass der Antrieb kompakt ausführbar ist und somit in einem Stollen einfach einsetzbar ist, ohne dass der Zugang zum Stollen für Menschen oder Förderbehälter wesentlich eingeschränkt ist. Insbesondere ist der kleinste Querschnitt des Getriebes des Antriebs größer als ein Zehntel der Querschnittsfläche des Stollens. Auf diese Weise ist auch genügend umgebende Luft vorhanden, an welche die Verlustwärme abführbar ist. Des Weiteren ist durch die reduzierte Unwucht auch eine geringe Schwingungseinkoppelung in die Stollenwand zu befürchten, so dass Gefahren, wie das Einbrechen des Stollens oder die Notwendigkeit stabilerer Abstützung des Stollens vermeidbar sind.

Die vorliegende Erfindung ist nicht auf die beschriebenen Ausführungsformen beschränkt. Änderungen und/oder Modifikationen der beschriebenen Ausführungsformen werden als alternative Formen der Erfindung betrachtet, sofern sie nicht vom Umfang der Erfindung abweichen, der durch die beigefügten Ansprüche definiert ist

Die Erfindung wird nun anhand von Abbildungen näher erläutert:
In der Figur 1 ist der Stand der Technik schematisch dargestellt.
In Figur 2 ist eine erfindungsgemäße Ausführung schematisch dargestellt.
In Figur 3 ist eine weitere Variante zur Ausführung schematisch dargestellt.
In Figur 4 ist eine alternative Variante der Ausführung schematisch dargestellt.

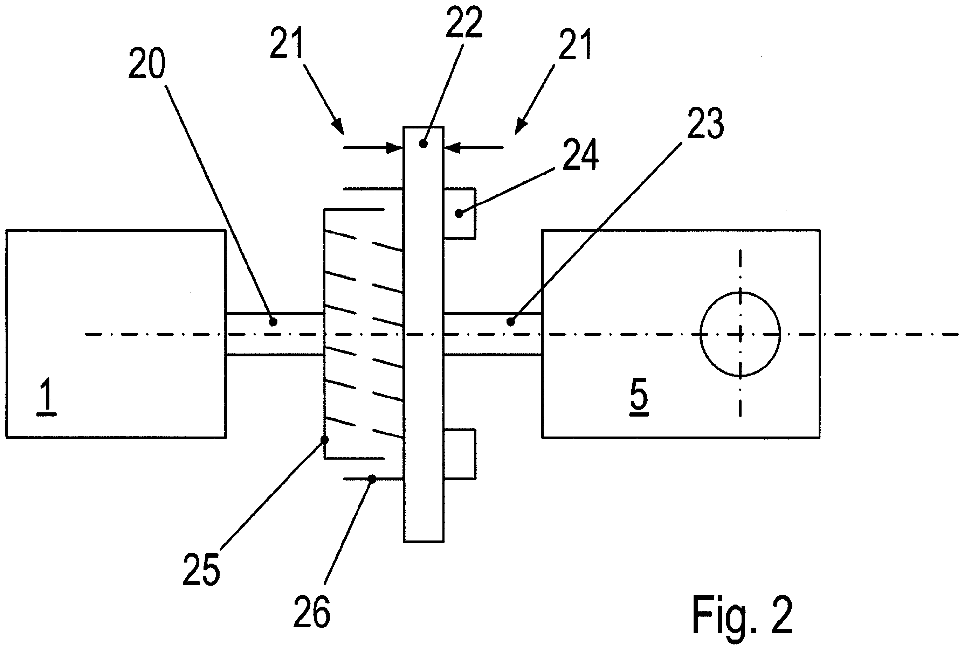

Wie in Figur 2 dargestellt, weist der erfindungsgemäße Antrieb einen Elektromotor 1 auf, dessen Rotorwelle 20 drehfest mit einem ersten Kupplungsteil 25 verbunden ist.

Ein zum Kupplungsteil 25 koaxial angeordnetes zweites Kupplungsteil 26 ist als Bremsscheibe 22 ausgeformt oder mit einer Bremsscheibe 22 drehfest verbunden. Die Bremsscheibe 22 oder das zweite Kupplungsteil 26 ist drehfest mit der eintreibenden Welle 23 eines Getriebes verbunden.

Die aus dem ersten Kupplungsteil 25 und dem zweiten Kupplungsteil 26 gebildete Kupplung ist schaltbar ausgeführt. Somit ist abhängig von einem Steuermittel die Kupplung zur Drehmomentdurchleitung eingeschaltet oder alternativ ist die Drehmomentdurchleitung vom ersten Kupplungsteil 25 ans zweite Kupplungsteil 26 unterbrochen.

Mittels eines stationär, also nicht drehfest mit der eintreibenden Welle 23 verbundenen Bremsmittels 21 ist die Bremsscheibe 22 abbremsbar und somit Drehmoment ableitbar über das Bremsmittel 21 an die Umgebung.

Das Betätigen des Bremsmittels 21 ist elektromagnetisch steuerbar, indem ein Elektromagnet bestromt wird oder nicht. Abhängig von der Bestromung wird das Bremsmittel 21 also auf die Bremsscheibe 22 gedrückt oder nicht, so dass die Bremse als Reibbremse wirksam ist oder nicht.

Bei Nichtbestromung wird ein Federelement als Rückstellelement verwendet. Somit muss bei Bestromung des Elektromagneten die vom Federelement erzeugte Federkraft überwunden werden, um das Bremsmittel 21 an die Bremsscheibe zu drücken. Bei Nichtbestromung bewirkt das Rückstellelement die Rückbewegung.

An der Bremsscheibe 22, insbesondere an der dem Getriebe 5 zugewandten Stirnseite der Bremsscheibe 22, sind auch Lüfterflügel 24 ausgeformt oder angeordnet. Dabei sind die Lüfterflügel 24 derart ausgebildet und angeordnet, dass der vorzugsweise radial angesaugte Luftstrom in axialer Richtung zum Getriebe 5 hin gefördert wird.

Somit ist also an einem Funktionsteil der Bremse, nämlich an der Bremsscheibe 22, ein Axiallüfter ausgebildet.

Außerdem sind Bremsscheibe 22 und zweites Kupplungsteil 26 miteinander integriert ausgeführt.

Die Kupplung ist als Flüssigkeitskupplung ausgeführt, so dass eine Steuerung des durchgeleiteten Drehmoments in einfacher Weise ermöglicht ist, insbesondere aus einer stationären Steuereinheit.

Die Bremse ist als Backenbremse ausführbar, wobei dann das Bremsmittel 21 eine Bremsbacke ist, die auf die Bremsscheibe 22 pressbar ist und somit die relativ zum Bremsmittel 21 vorhandene Drehbewegung der Bremsscheibe 22 abbremsbar ist.

Alternativ ist die Bremse als Trommelbremse ausbildbar, wobei dann das Bremsmittel 21 eine Bremsbacke ist, die auf eine anstatt der Bremsscheibe 22 vorgesehene Bremstrommel pressbar ist und somit die relativ zum Bremsmittel 21 vorhandene Drehbewegung der Bremstrommel abbremsbar ist. An der Bremstrommel, insbesondere an der dem Getriebe 5 zugewandten Stirnseite der Bremstrommel, sind auch wiederum Lüfterflügel 24 ausgeformt oder angeordnet. Dabei sind die Lüfterflügel 24 ebenfalls derart ausgebildet und angeordnet, dass der vorzugsweise radial angesaugte Luftstrom in axialer Richtung zum Getriebe 5 hin gefördert wird. Somit ist also an der Bremstrommel ein Axiallüfter ausgebildet.

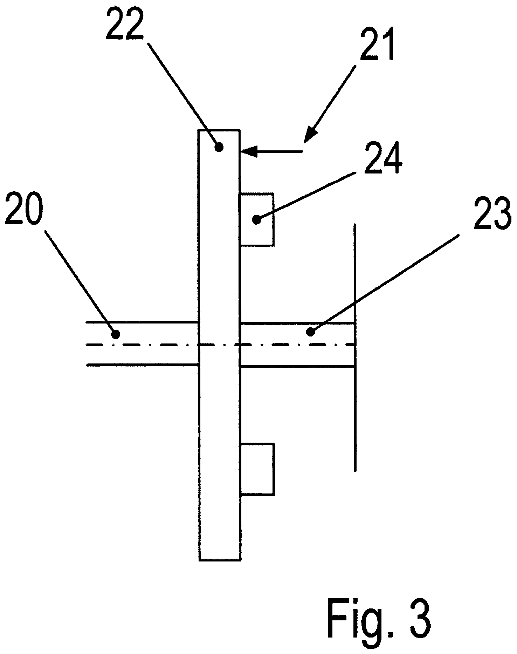

Wie in Figur 3 gezeigt, ist bei einem weiteren Ausführungsbeispiel die Kupplung nicht vorhanden. Somit ist die Rotorwelle 20 des Motors 1 drehfest mit der Bremsscheibe 22 verbunden und diese wiederum drehfest mit der eintreibenden Welle des Getriebes 5. Wiederum ist ein Elektromagnet zur Betätigung der Bremse vorhanden, so dass abhängig von der Bestromung eine Reibwirkung zwischen dem Bremsmittel 21 und der Bremsscheibe 22 bewirkt wird. An der Bremsscheibe 22, insbesondere an der dem Getriebe 5 zugewandten Stirnseite der Bremsscheibe 22, sind auch wiederum Lüfterflügel 24 ausgeformt oder angeordnet. Dabei sind die Lüfterflügel 24 ebenfalls derart ausgebildet und angeordnet, dass der vorzugsweise radial angesaugte Luftstrom in axialer Richtung zum Getriebe 5 hin gefördert wird. Somit ist also an der Bremsscheibe 22 ein Axiallüfter ausgebildet.

Alternativ ist die Bremse wiederum als Trommelbremse ausgebildet, wobei die Bremstrommel die Bremsscheibe 22 ersetzt und das Bremsmittel 21, insbesondere Bremsbacke, auf die Bremstrommel gedrückt wird - abhängig von der Bestromung eines Elektromagneten. An der Bremstrommel, insbesondere an der dem Getriebe 5 zugewandten Stirnseite der Bremstrommel, sind auch wiederum Lüfterflügel 24 ausgeformt oder angeordnet. Dabei sind die Lüfterflügel 24 ebenfalls derart ausgebildet und angeordnet, dass der vorzugsweise radial angesaugte Luftstrom in axialer Richtung zum Getriebe 5 hin gefördert wird. Somit ist also an der Bremstrommel ein Axiallüfter ausgebildet.

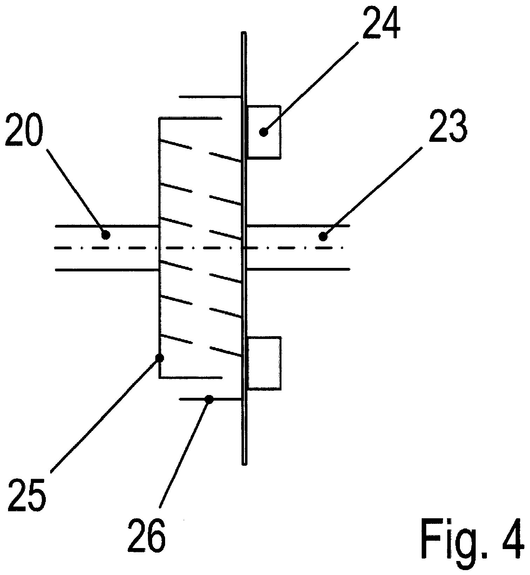

Wie in Figur 4 gezeigt, ist bei einem anderen Ausführungsbeispiel keine Bremse ausgebildet, sondern das erste Kupplungsteil 25 drehfest mit der Rotorwelle 20 des Elektromotors 1 verbunden und das zweite Kupplungsteil 26 drehfest mit der eintreibenden welle 23 des Getriebes 5. Außerdem sind am zweiten Kupplungsteil 26 Lüfterflügel 24 ausgeformt oder angeordnet. Dabei sind die Lüfterflügel 24 ebenfalls derart ausgebildet und angeordnet, dass der vorzugsweise radial angesaugte Luftstrom in axialer Richtung zum Getriebe 5 hin gefördert wird. Somit ist also an der Bremstrommel ein Axiallüfter ausgebildet.

In den vorgenannten erfindungsgemäßen Ausführungsbeispielen ist die Kupplung als Flüssigkeitskupplung ausführbar, so dass hohe Drehmomente schaltbar sind. Die Lüfterflügel 24 sind somit direkt an der Kupplung angebracht.

In jedem Fall sind also die Kupplung, der Lüfter und/oder die Bremse -je nach Vorhandensein - in einer einzigen Einheit angeordnet und somit auch von einem einzigen, insbesondere also gemeinsamen, Gehäuse schützbar.

Der erfindungsgemäße Antrieb ist im Untertage-Bergbau einsetzbar, da durch die verringerte Unwucht weniger Einsturzgefahr vom Antrieb ausgeht. Der Antrieb ist dort vorzugsweise zum Antrieben von Fördervorrichtungen, wie Fließbänder oder Förderketten oder dergleichen, einsetzbar. Dabei muss das Fließband samt Transportbehälter mit Transportgut ebenso im Stollen eines Bergwerks angeordnet werden wie auch ein Zugang für Menschen. Damit außerdem genügend Luft zum Abtransport der Verlustwärme vorhanden ist, sollte der kleinste Querschnitt des Getriebes zwar größer als ein Zehntel aber kleiner als die Hälfte der Querschnittsfläche des Stollens sein.

### Bezugszeichenliste

1 Motor
2 Kupplung
3 Bremse
4 Lüfter
5 Getriebe
20 Rotorwelle des Motors 1
21 Bremsmittel
22 Bremsscheibe
23 Welle, insbesondere eintreibende Welle des Getriebes 5
24 Lüfterflügel, insbesondere Lüfterschaufel
25 erstes Kupplungsteil
26 zweites Kupplungsteil

## Patentansprüche

1. Antrieb, aufweisend einen Elektromotor (1) und ein Getriebe (5) sowie eine zwischen dem Elektromotor (1) und dem Getriebe (5) angeordnete Komponente,
wobei die Komponente ein erstes und ein zweites Teil aufweist,
wobei die Rotorwelle (20) des Elektromotors (1) mit dem ersten Teil drehfest verbunden ist und die eintreibende Welle (23) des Getriebes (5) mit dem zweiten Teil drehfest verbunden ist,
wobei an dem zweiten Teil Lüfterflügel (24) **derart ausgeformt oder angeordnet sind,** dass der von den Lüfterflügeln (24) vorzugsweise radial angesaugte Luftstrom in axialer Richtung zum Getriebe (5) hin gefördert wird, also am zweiten Teil ein Axiallüfter ausgebildet ist,
**wobei das erste Teil ein erstes Kupplungsteil (25) und das zweite Teil ein zweites Kupplungsteil (26) einer schaltbaren Kupplung (2), ist,**
**wobei Drehmoment vom ersten zum zweiten Kupplungsteil (25, 26) abhängig vom Schaltzustand durchleitbar ist oder nicht,**
**wobei das zweite Teil, also das zweite Kupplungsteil (26), mit einer Bremsscheibe (22) oder Bremstrommel integriert ausgebildet ist,**
**wobei die Kupplung (2) als Flüssigkeitskupplung ausgebildet ist, wobei erstes und zweites Kupplungsteil (25, 26) auf den einander zugewandten Seiten Lamellen aufweisen,**
**wobei bei Bestromung eines Elektromagneten der Komponente eine Bremsbacke auf die Bremsscheibe (22) oder Bremstrommel gedrückt wird entgegen der von einem Federelement erzeugten Federkraft,**
**wobei der Lüfter (4) am zweiten Teil integriert ausgeführt ist, wobei das zweite Teil auch als zweites Kupplungsteil (26) fungiert und als Bremsscheibe (22) beziehungsweise Bremstrommel,**
**wobei das erste und zweite Teil von einem gemeinsamen Gehäuse umgeben ist, also im Gehäuse die Lüfterfunktion, Bremsfunktion und Kupplungsfunktion ausgeführt wird.**

2. **Anlage mit einem** Antrieb nach Anspruch 1,
**wobei** die Anlage ein Bergwerk ist und der Antrieb in einem Stollen des Bergwerks angeordnet ist,
wobei der Antrieb eine Fördervorrichtung antreibt,
insbesondere wobei die kleinste Querschnittsfläche des Getriebes (5) des Antriebs größer als ein Zehntel der Querschnittsfläche des Stollens beträgt und kleiner als die Hälfte der Querschnittsfläche des Stollens beträgt.

## Claims

1. Drive comprising an electric motor (1), a gearing (5) and a component arranged between the electric motor (1) and the gearing (5),
wherein the component comprises a first part and a second part,
wherein the rotor shaft (20) of the electric motor (1) is connected to the first part for conjoint rotation and the input shaft (23) of the gearing (5) is connected to the second part for conjoint rotation,
wherein fan blades (24) are shaped or arranged on the second part such that the air flow sucked in, preferably radially, by the fan blades (24) is conveyed towards the gearing (5) in the axial direction, i.e. an axial fan is formed on the second part,
wherein the first part is a first clutch part (25) and the second part is a second clutch part (26) of a switchable clutch (2),
wherein torque can be transmitted or not transmitted from the first to the second clutch part (25, 26) depending on the switching state,
wherein the second part, i.e. the second clutch part (26), is formed so as to be integrated with a brake disc (22) or brake drum,
wherein the clutch (2) is formed as a fluid clutch, wherein the first and the second clutch part (25, 26) have slats on the sides facing one another,
wherein, when an electromagnet of the component is energised, a brake shoe is pushed onto the brake disc (22) or brake drum, counter to the spring force generated by a spring element,
wherein the fan (4) is configured so as to be integrated on the second part, wherein the second part also acts as a second clutch part (26) and as a brake disc (22) or brake drum, wherein the first and the second part are enclosed by a shared housing, i.e. the fan function, the brake function and the clutch function are configured in the housing.

2. Installation comprising a drive according to claim 1,
wherein the installation is a mine and the drive is arranged in an adit of the mine,
wherein the drive drives a conveyor device,
in particular wherein the smallest cross-sectional area of the gearing (5) of the drive is greater than a tenth of the cross-sectional area of the adit and is less than half the cross-sectional area of the adit.

## Revendications

1. Entraînement, présentant un moteur électrique (1) et une transmission (5) ainsi qu'un composant disposé entre le moteur électrique (1) et la transmission (5), dans lequel le composant présente une première et une deuxième partie,
dans lequel l'arbre de rotor (20) du moteur électrique (1) est solidaire en rotation de la première partie et l'arbre menant (23) de la transmission (5) est solidaire en rotation de la deuxième partie,
dans lequel des ailettes de ventilateur (24) sont formées ou disposées sur la deuxième partie de telle sorte que le flux d'air aspiré de préférence radialement par les ailettes de ventilateur (24) est transporté dans la direction axiale vers la transmission (5), c'est-à-dire qu'un ventilateur axial est formé sur la deuxième partie,
dans lequel la première partie est une première partie d'embrayage (25) et la deuxième partie est une deuxième partie d'embrayage (26) d'un embrayage commutable (2),
dans lequel un couple peut être transmis ou non de la première à la deuxième partie d'embrayage (25, 26) en fonction de l'état de commutation,
dans lequel la deuxième partie, c'est-à-dire la deuxième partie d'embrayage (26), est formée de manière intégrée avec un disque de frein (22) ou un tambour de frein, dans lequel l'embrayage (2) est formé comme un embrayage hydraulique, la première et la deuxième partie d'embrayage (25, 26) présentant des lamelles sur les côtés tournés l'un vers l'autre,
dans lequel, lorsqu'un électroaimant du composant est alimenté en courant, une mâchoire de frein est pressée sur le disque de frein (22) ou le tambour de frein à l'encontre de la force de ressort générée par un élément élastique,
dans lequel le ventilateur (4) est réalisé de manière intégrée sur la deuxième partie, la deuxième partie fonctionnant également comme deuxième partie d'embrayage (26) et comme disque de frein (22) ou tambour de frein,
dans lequel la première et la deuxième partie sont entourées d'un carter commun, c'est-à-dire que la fonction de ventilation, la fonction de freinage et la fonction d'embrayage sont réalisées dans le carter.

2. Installation comprenant un entraînement selon la revendication 1,
dans laquelle l'installation est une mine et l'entraînement est disposé dans une galerie de la mine,
dans laquelle l'entraînement entraîne un dispositif de transport,
en particulier dans laquelle la plus petite surface de section transversale de la transmission (5) de l'entraînement est supérieure à un dixième de la surface de section transversale de la galerie et inférieure à la moitié de la surface de section transversale de la galerie.
